# EUROPEAN PATENT APPLICATION

(11) **EP 4 645 581 A1**
(43) Date of publication of application: **05.11.2025**
(21) Application number: 24907716.5
(22) Date of filing: 17.10.2024
(51) Int. Cl.: H01M 50/59, H01M 10/04, H01M 50/502, H01M 50/507, H01M 50/211, H01M 50/517

(54) **BATTERY MODULE AND BATTERY PACK COMPRISING SAME**

(30) Priority: 18.12.2023 KR 20230184873
(71) Applicant: LG Energy Solution, Ltd., Seoul 07335 (KR)
(72) Inventor: Han, Seungwon, Daejeon 34122 (KR); Sin, Jehwan, Daejeon 34122 (KR)
(74) Representative: Plasseraud IP
(86) International application number: PCT/KR2024/015737
(87) International publication number: WO 2025/135431

(57) **Abstract**

A battery module according to an embodiment of the present disclosure includes a battery cell stack in which a plurality of battery cells is stacked, a module case for accommodating the battery cell stack, a busbar frame disposed on one side of the battery cell stack, and two insulating covers disposed on both sides of the battery cell stack, wherein one of the two insulating covers includes a pressure pad, the other insulating cover is disposed on the outside of the busbar frame, and the pressure pad of the one insulating cover pressurizes the battery cell stack in a direction of the other insulating cover disposed on the outside of the busbar frame.

## Description

### [TECHNICAL FIELD]

The present disclosure relates to a battery module and a battery pack including the same, and more specifically, to a battery module in which the accuracy of the position of a hole of a terminal busbar is improved, and a battery pack including the same.

### [BACKGROUND ART]

A secondary battery refers to a battery that can be charged and discharged, unlike a primary battery that cannot be charged, and is applied not only to portable devices but also to electric vehicles (EVs) and hybrid electric vehicles (HEVs) that are driven using an electric drive source.

Currently widely used types of secondary batteries include lithium ion batteries, lithium polymer batteries, nickel cadmium batteries, nickel hydrogen batteries, nickel zinc batteries, etc. The operating voltage of such a unit secondary battery cell, i.e., a unit battery cell, is approximately 2.5 V to 4.6 V. Therefore, when a higher output voltage is required, a battery pack is configured by connecting multiple battery cells in series. In addition, a battery pack is configured by connecting multiple battery cells in parallel depending on the charge/discharge capacity required for the battery pack. Therefore, the number of battery cells included in the battery pack can be set in various ways depending on the required output voltage or charge/discharge capacity.

When a battery pack is configured by connecting multiple battery cells in series/parallel, it is common to first configure a battery module composed of at least one battery cell, preferably multiple battery cells, and then use at least one battery module and add other components to configure the battery pack. Here, the battery module refers to a component in which multiple battery cells are connected in series or parallel, and the battery pack may refer to a component in which multiple battery modules are connected in series or parallel to increase capacity and output.

In a battery module, a cell block composed of a plurality of battery cells has the possibility of positional movement within a clearance between the cell block and a module frame.

### [DETAILED DESCRIPTION OF INVENTION]

### [TECHNICAL PROBLEMS]

An object of the present disclosure devised to solve the above-mentioned problems is to provide a battery module capable of restricting the position of a cell block and improving the accuracy of the position of a terminal hole, and a battery pack including the same.

### [TECHNICAL SOLUTION]

A battery module according to an embodiment of the present disclosure includes a battery cell stack in which a plurality of battery cells is stacked, a module case for accommodating the battery cell stack, a busbar frame disposed on one side of the battery cell stack, and two insulating covers disposed on both sides of the battery cell stack, wherein one of the two insulating covers includes a pressure pad, the other insulating cover is disposed on the outside of the busbar frame, and the pressure pad of the one insulating cover pressurizes the battery cell stack in a direction of the other insulating cover disposed on the outside of the busbar frame.

Furthermore, the pressure pad may be disposed on an inner surface of the one insulating cover facing the battery cell stack.

Furthermore, the pressure pad may be compressible.

Furthermore, the pressure pad may be a foam pad.

Furthermore, a plurality of pressure pads may be disposed on the inner side of the one insulating cover.

Furthermore, the busbar frame may include a protrusion, and the protrusion may contact the other insulating cover.

Furthermore, the busbar frame may be disposed on each of both sides of the battery cell stack, and the two insulating covers may be respectively disposed on outer sides of the busbar frames on both sides of the battery cell stack.

Furthermore, the battery module may further include a plurality of busbars disposed in the busbar frame.

Furthermore, an end of the pressure pad may be disposed between the busbars.

Furthermore, the busbar frame may further include a rib disposed between the busbars.

Furthermore, the pressure pad may pressurize the rib.

Furthermore, the pressure pad may extend vertically inside the one insulating cover.

Furthermore, the battery module may further include a terminal busbar disposed in the busbar frame, and a fixing member having a fixing hole for fixing one end of the terminal busbar and disposed beneath one end of the terminal busbar in the other insulating cover.

Furthermore, the battery module may further include an end plate disposed on the outside of the other insulating cover and having a terminal opening through which one end of the terminal busbar is exposed.

Furthermore, the terminal busbar may include a joining hole disposed at one end of the terminal busbar.

Furthermore, the battery module may further include two end plates respectively disposed on the outer sides of the two insulating covers.

A battery module according to an embodiment of the present disclosure includes a battery cell stack in which a plurality of battery cells is stacked, a module case for accommodating the battery cell stack, a busbar frame disposed on one side of the battery cell stack, and an insulating cover disposed on the outside of the busbar frame, wherein the busbar frame includes a protrusion contacting the insulating cover.

### [EFFECT OF INVENTION]

A battery module and a pack according to one embodiment of the present disclosure have the effect of restricting the position of a cell block and improving the accuracy of the position of a hole of a terminal busbar.

### [BRIEF DESCRIPTION OF THE DRAWING]

FIG. 1 is a perspective view of a battery module according to an embodiment of the present disclosure.
FIG. 2 is an exploded perspective view of the battery module according to an embodiment of the present disclosure.
FIG. 3 is a perspective view of a battery cell according to an embodiment of the present disclosure.
FIG. 4 is a perspective view of a terminal busbar according to an embodiment of the present disclosure.
FIG. 5 is a perspective view of an insulating cover and an end plate according to an embodiment of the present disclosure.
FIG. 6 is a perspective view of an insulating cover in an embodiment of the present disclosure.
FIG. 7 is a diagram showing that the insulating cover and an end plate are coupled to both sides of a battery cell stack in an embodiment of the present disclosure.
FIG. 8 is a diagram showing a state in which the insulating cover is coupled to a busbar frame in an embodiment of the present disclosure.
FIG. 9 is a partial plan view of a busbar frame and the insulating cover in an embodiment of the present disclosure.
FIG. 10 is a partial perspective view of the busbar frame and the insulating cover in an embodiment of the present disclosure.
FIG. 11 is a diagram showing a state in which a hole of a terminal busbar is accurately positioned in an embodiment of the present disclosure.
FIG. 12 is a diagram showing a battery pack according to an embodiment of the present disclosure.
FIG. 13 is a perspective view of a vehicle equipped with the battery pack in an embodiment of the present disclosure.

### [BEST MODE FOR CARRYING OUT THE INVENTION]

The advantages and features of the present disclosure, and the methods for achieving the same will become clear with reference to the embodiments described below in conjunction with the accompanying drawings. However, the present disclosure is not limited to the embodiments disclosed below, but may rather be implemented in various different forms, and these embodiments are provided only to make the present disclosure complete and to fully inform those skilled in the art of the scope of the disclosure, and the present disclosure is defined only by the scope of the claims. Accordingly, in some embodiments, well-known process steps, well-known device structures, and well-known techniques are not specifically described in order to avoid ambiguity in the interpretation of the present disclosure. Like reference numerals refer to like elements throughout the specification.

In the drawings, the thickness may be enlarged to clearly express various layers and regions. Like reference numerals are used for similar parts throughout the specification. When a part, such as a layer, a film, a region, or a plate, is said to be "on" another part, this includes not only cases where it is "directly on" the other part, but also cases where there is another part in between. Conversely, when a part is said to be "directly on" another part, it means that there is no other part in between. Further, when a part, such as a layer, a film, a region, or a plate, is said to be "beneath" another part, this includes not only cases where it is "directly beneath" the other part, but also cases where there are other parts in between. Conversely, when a part is said to be "directly beneath" another part, it means that there are no other parts in between.

First, a battery module 1000 according to an embodiment of the present disclosure will be described in detail with reference to the drawings.

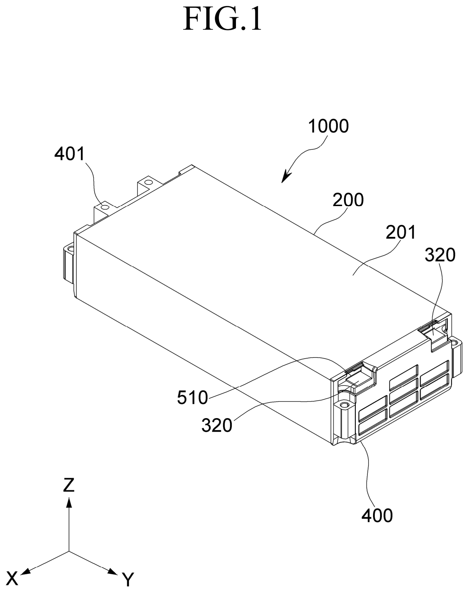

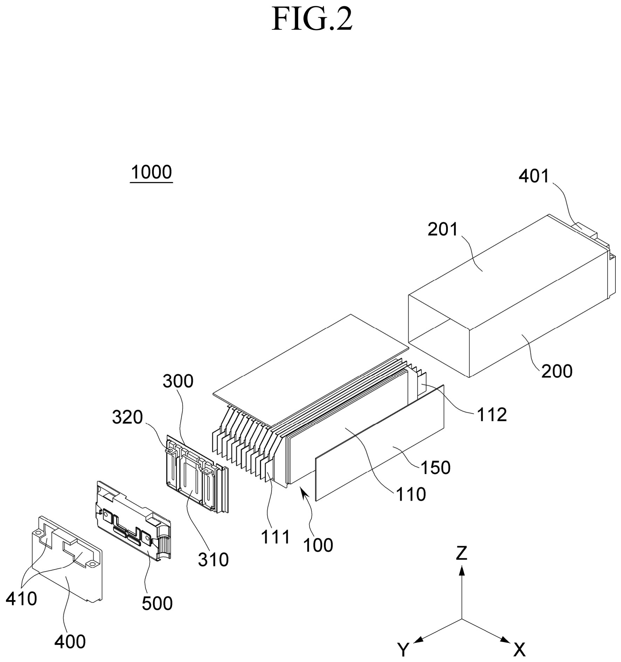

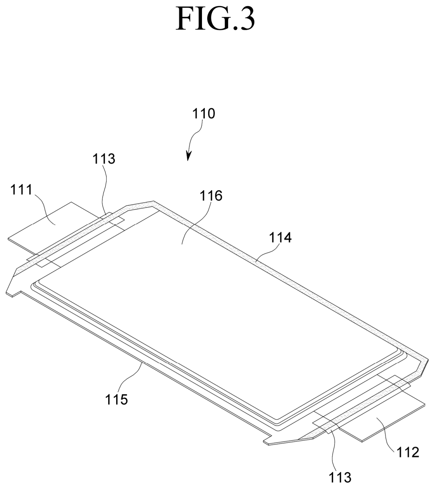

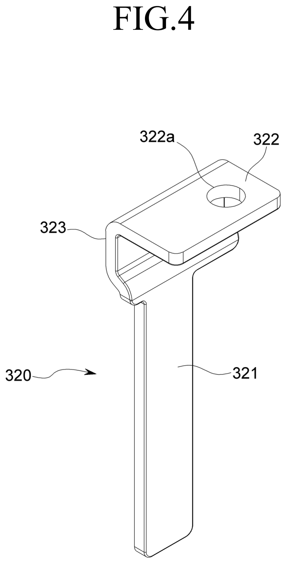

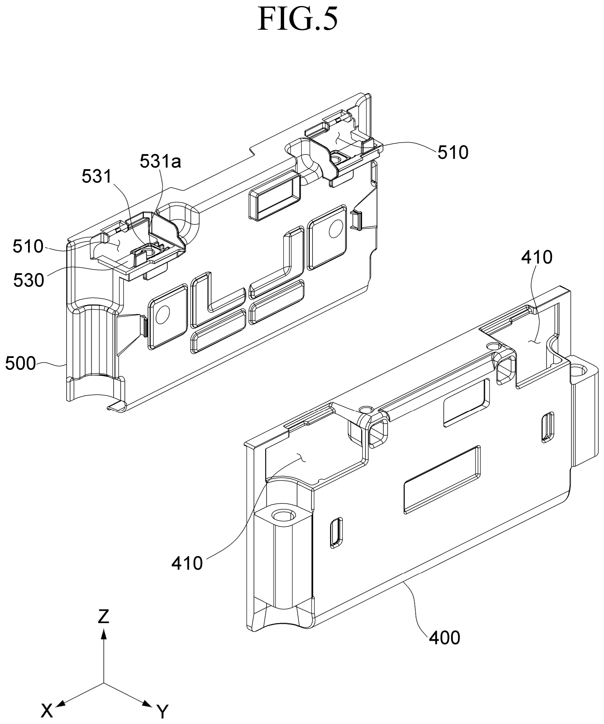

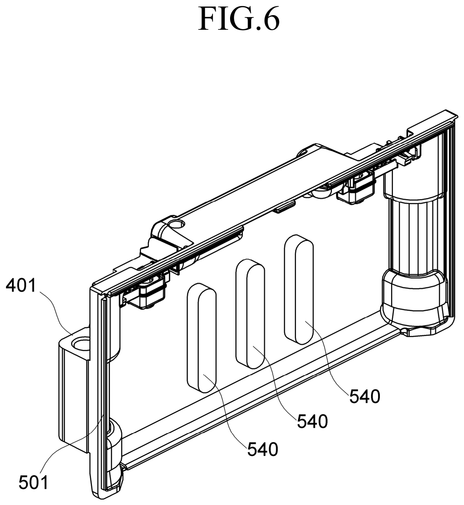

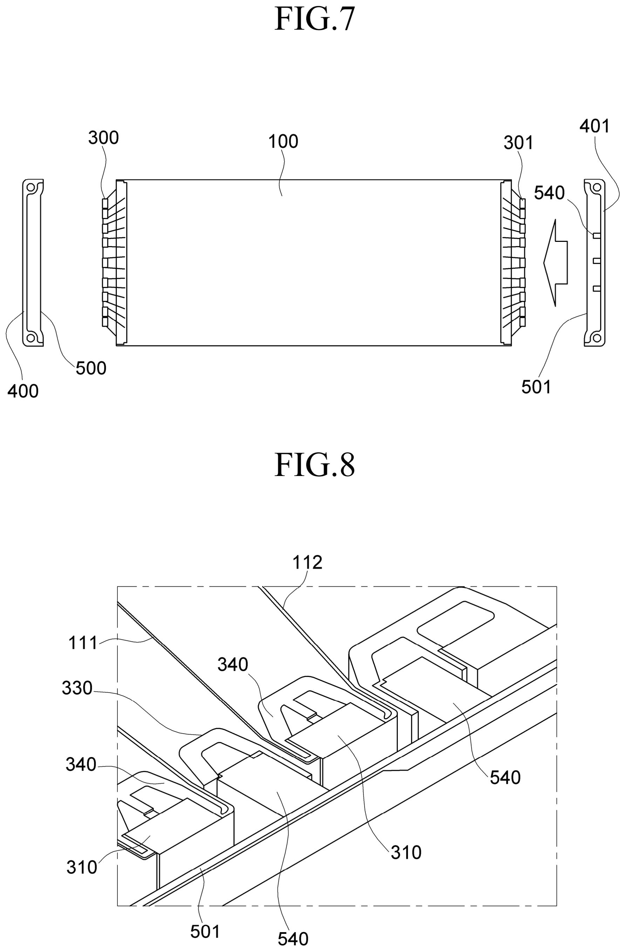

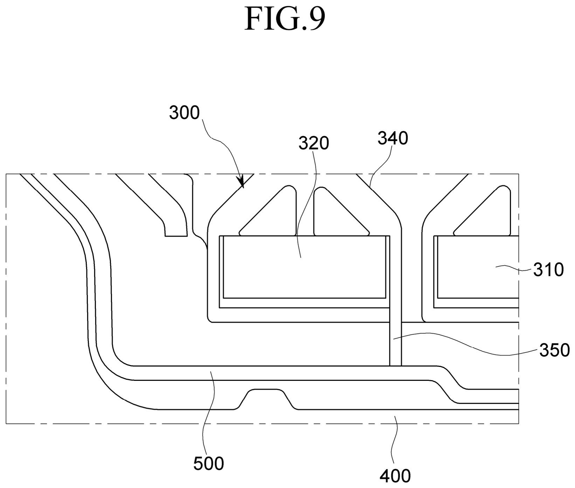

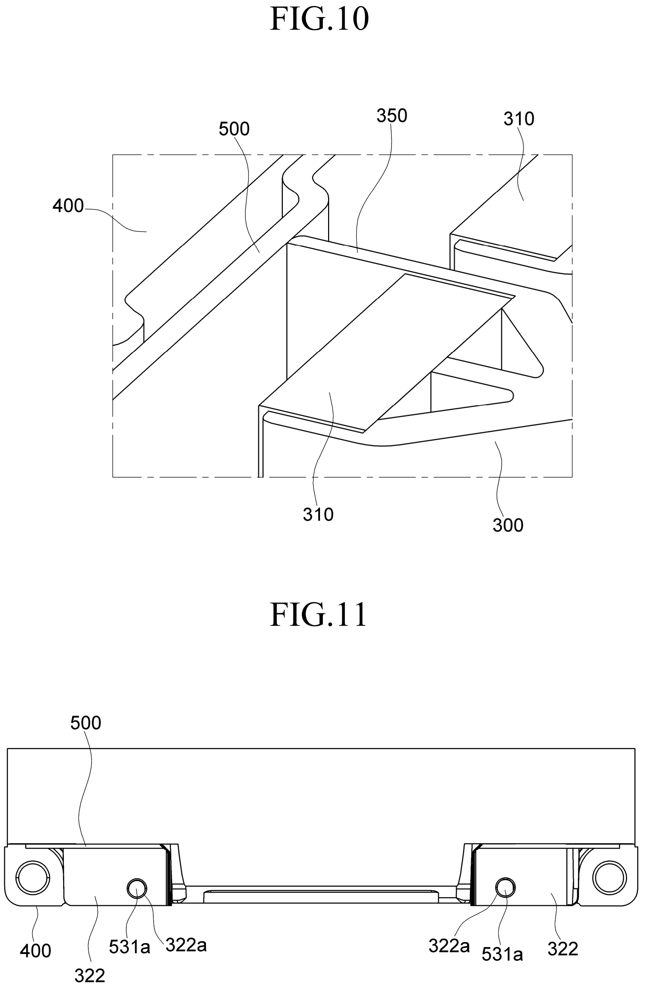

FIG. 1 is a perspective view of a battery module according to the present disclosure, FIG. 2 is an exploded perspective view of the battery module according to the present disclosure, FIG. 3 is a perspective view of a battery cell in the present disclosure, FIG. 4 is a perspective view of a terminal busbar in the present disclosure, FIG. 5 is a perspective view of an insulating cover and an end plate in the present disclosure, FIG. 6 is a perspective view of an insulating cover in the present disclosure, FIG. 7 is a diagram showing that the insulating cover and an end plate are coupled to both sides of a battery cell stack in the present disclosure, FIG. 8 is a diagram showing a state in which the insulating cover is coupled to a busbar frame in the present disclosure, FIG. 9 is a partial plan view of a busbar frame and the insulating cover in an embodiment of the present disclosure, FIG. 10 is a partial perspective view of the busbar frame and the insulating cover in an embodiment of the present disclosure, and FIG. 11 is a diagram showing a state in which a hole of a terminal busbar is accurately positioned in an embodiment of the present disclosure.

The battery module 1000 according to one embodiment of the present disclosure may include a battery cell stack 100 in which a plurality of battery cells 110 is stacked, a module case 200 that accommodates the battery cell stack 100, busbar frames 300 and 301 positioned on one side and/or the other side of the battery cell stack 100, insulating covers 500 and 501 positioned on the outside of the busbar frames 300 and 301, and end plates 400 and 401 positioned on the outside of the insulating covers 500 and 501.

The battery cell stack 100 may be formed by stacking the plurality of battery cells 110 in one direction, and the plurality of battery cells 110 may be electrically connected. The direction in which the plurality of battery cells 110 is stacked may be the X-axis direction (or -X-axis direction) in FIG. 2.

The direction from the front to the rear of the battery cell stack 100 or the opposite direction may be defined as the longitudinal direction of the battery cell stack 100 and may be the Y-axis direction in the figure. In addition, the direction from the upper surface to the lower surface of the battery cell stack 100 or the opposite direction may be defined as the width direction of the battery cell stack 100 and may be the Z-axis direction in the figure.

The longitudinal direction of the battery cell stack 100 may be substantially the same as the longitudinal direction of the battery cells 110. Electrode leads 111 and 112 of the battery cells 110 may be positioned on the front and rear sides of the battery cell stack 100, and busbars 310 and 320 of the battery module 1000 may be positioned close to the front and rear sides of the battery cell stack 100 to easily form electrical connections with the electrode leads 111 and 112.

The battery cell 110 may be provided as a pouch-type battery cell, and the number of battery cells stacked per unit area may be maximized in the case of the pouch-type battery cell. However, the battery cell 110 does not necessarily have to be provided in a pouch type, and may be provided in a square, cylindrical, or other various shapes.

The battery cell 110 provided in a pouch type may include an electrode assembly and a cell case 115 that accommodates the electrode assembly (refer to FIG. 3).

The cell case 115 of the battery cell 110 may be a pouch-type cell case 115 for accommodating the electrode assembly. The cell case 115 includes a lower case and an upper case that covers the lower case, and the upper and lower cases may be formed as one piece. In addition, as illustrated in FIG. 3, connecting portions of the upper and lower cases may be formed in a structure in which they are bent and folded. In addition, as illustrated, the upper case may completely cover the lower case, and a sealing portion 114 may be formed at the edge.

The upper and lower cases may both be formed in a laminate structure including an inner covering layer, a metal layer, and an outer covering layer. The inner covering layer is located on the inside of the cell case 115 based on the metal layer, and the inner covering layer needs to have insulation and electrolytic resistance since it is in direct contact with the electrode assembly, and in order to achieve sealing, a sealing area where the inner layers are thermally bonded is required to have excellent thermal bonding strength. The metal layer is located between the inner covering layer and the outer covering layer and corresponds to a barrier layer that prevents moisture or various gases from penetrating into the battery from the outside, and a preferable material for the metal layer in contact with the inner covering layer may be an aluminum (Al) thin film that is lightweight and has excellent formability. The outer covering layer is located on the outside of the cell case 115 based on the metal layer, and the outer covering layer can use a heat-resistant polymer that has excellent tensile strength, moisture permeability, and air permeability to protect the electrode assembly while ensuring heat resistance and chemical resistance, and for example, nylon or polyethylene terephthalate may be used for the outer covering layer.

A receiving groove 116 may be formed in the upper and lower cases, and the electrode assembly may be received in the receiving groove 116 of the upper and lower cases.

The electrode assembly accommodated in the cell case 115 may be one of a group consisting of a jelly-roll type electrode assembly having a structure in which a separator is interposed between long sheet-shaped positive and negative electrodes and then rolled up, a stack type electrode assembly composed of unit cells having a structure in which rectangular positive and negative electrodes are laminated with a separator interposed therebetween, a stack-folding type electrode assembly in which unit cells are rolled up by a long separator film, and a lamination-stack type electrode assembly in which unit cells are laminated with a separator interposed therebetween and attached to each other.

In addition, the electrode assembly may include two electrode tabs and two electrode leads 111 and 112 respectively connected to the two electrode tabs by welding.

One of the two electrode leads 111 and 112 may be a positive lead connected to a positive tab, and the other may be a negative lead connected to a negative tab.

A lead film 113 may be attached to each of the electrode leads 111 and 112. The lead film 113 coupled to the electrode leads 111 and 112 is positioned between the electrode leads 111 and 112 and the cell case 115 to prevent a short circuit from occurring between the electrode leads 111 and 112 and the cell case 115 and to improve sealing power, thereby preventing leakage of the electrolyte, and the like.

The two electrode leads 111 and 112 are illustrated as being respectively positioned on both sides of the electrode assembly, but may be positioned on only one side of the electrode assembly depending on the arrangement of the electrode tabs.

The module case 200 may be for protecting the battery cell stack 100 and electrical components connected thereto from external physical impact, and the module case 200 may accommodate the battery cell stack 100 and the electrical components connected thereto in the internal space thereof.

The module case 200 may have various structures, and for example, the module case 200 may have a mono-frame structure. Here, a mono-frame may be in the form of a metal plate in which the upper surface, the lower surface, and both side surfaces are integrated. The mono-frame may be manufactured by extrusion molding. As another example, the module case 200 may have a structure in which a U-shaped frame and an upper plate (upper surface 201) are combined. In the case of a structure in which a U-shaped frame and an upper plate are combined, the structure of the module case 200 may be formed by combining the upper plate on the upper side of the U-shaped frame, which is a metal plate in which the lower side and both sides are combined or integrated, and each frame or plate may be manufactured by press molding. In addition, the module case 200 may have an L-shaped frame structure in addition to a mono-frame or a U-shaped frame, and may be provided as in various structures not described in the above-described examples.

The structure of the module case 200 may be provided in an open form in the longitudinal direction of the battery cell stack 100. The front and rear sides of the battery cell stack 100 may not be covered by the module case 200. The electrode leads 111 and 112 of the battery cells 110 may not be covered by the module case 200. The front and rear of the battery cell stack 100 may be covered by the busbar frames 300 and 301, the end plate 400, or the busbars 310 and 320 which will be described later, and accordingly, the front and rear of the battery cell stack 100 can be protected from external physical impacts and the like.

A compression pad 150 may be positioned between the battery cell stack 100 and one side of the inner surface of the module case 200.

The compression pad 150 may be disposed to face the battery cell 110 positioned at the outermost side of the battery cell stack 100 in the X-axis direction in the figure.

Further, although not shown, a thermally conductive resin may be injected between the battery cell stack 100 and the inner surface of the module case 200, and a thermally conductive resin layer (not shown) may be formed between the battery cell stack 100 and one side of the inner surface of the module case 200 by the injected thermally conductive resin. Here, the thermally conductive resin layer may be positioned on the Z-axis of the battery cell stack 100, and the thermally conductive resin layer may be formed between the battery cell stack 100 and the bottom surface positioned on the -Z-axis of the module case 200.

The busbar frames 300 and 301 may be positioned on one side of the battery cell stack 100 and may cover one side of the battery cell stack 100 while guiding connection between the battery cell stack 100 and an external device. Specifically, the busbar frames 300 and 301 may be positioned on the front or rear of the battery cell stack 100 as illustrated, or may also be positioned on the upper surface, lower surface, or side surface. At least one of the busbars 310 and 320 and a module connector may be mounted on the busbar frames 300 and 301. As illustrated in FIG. 2, one side of the busbar frames 300 and 301 may be connected to one side or the other side of the battery cell stack 100, and the other side of the busbar frames 300 and 301 may be connected to the busbars 310 and 320.

The busbar frames 300 and 301 may include one or more busbar mounting portions 340 on which the busbars 310 and 320 are combined and mounted, and one or more ribs 330 (refer to FIG. 8).

In the busbar frames 300 and 301, the busbars 310 and 320 may be mounted on the front of the busbar mounting portions 340, and a plurality of busbar mounting portions 340 may be disposed to be spaced apart from each other in the width direction of the battery module 1000.

The ribs 330 may be configured to connect two busbar mounting portions 340 between adjacent busbar mounting portions 340. The ribs 340 may be disposed between two adjacent busbar mounting portions 340 to improve the rigidity of the busbar frames 300 and 301.

The busbar frames 300 and 301 may be made of an electrically insulating material or may include an insulating material. The busbar frames 300 and 301 may restrict the busbars 310 and 320 from contacting other parts of the battery cells 110 other than the parts where the busbars are connected to the electrode leads 111 and 112, and may prevent an electrical short circuit from occurring.

The busbar frames 300 and 301 may be respectively positioned on one side and the other side of the battery cell stack 100.

The busbars 310 and 320 may be mounted on the busbar mounting portions 340 on one side of the busbar frames 300 and 301 and may be used to electrically connect the battery cell stack 100 or the battery cells 110 and an external device circuit. A plurality of busbars 310 and 320 may be provided and may be positioned between the battery cell stack 100 or the busbar frames 300 and 301 and the end plate 400, thereby being protected from external impacts, and minimizing deterioration of durability due to external moisture, etc.

The busbars 310 and 320 may be electrically connected to the battery cell stack 100 through the electrode leads 111 and 112 of the battery cells 110.

Specifically, the electrode leads 111 and 112 of the battery cells 110 may be bent after passing through lead slits formed in the busbar frames 300 and 301 and connected to the busbars 310 and 320. As shown in FIG. 8, the electrode leads 111 and 112 of the battery cell 110 may be connected to both sides of the busbars 310 and 320, the electrode lead 111 connected to one side of each of the busbars 310 and 320 may be a positive lead, and the electrode lead 112 connected to the other side of each of the busbars 310 and 320 may be a negative lead.

The battery cells 110 constituting the battery cell stack 100 may be connected in series or in parallel by the busbars 310 and 320.

The busbars 310 and 320 may include a terminal busbar 320 for electrically connecting one battery module 100 to another battery module 100. At least a portion of the terminal busbar 320 may be exposed to the outside of the end plate 400 to be connected to another battery module 100, and the end plate 400 may include a terminal opening 410 for this purpose.

The terminal busbar 320 may have one end (a second portion 322) exposed through an opening 510 of the insulating cover 500 and the terminal opening 410 of the end plate 400.

As illustrated in FIG. 4, the terminal busbar 320 may include a first portion 321 connected to the electrode leads 111 and 112 of the battery cell 110 and the second portion 322 exposed to the outside through the terminal opening 410. In addition, the terminal busbar 320 may further include a bent portion 323 formed between the first portion 321 and the second portion 322.

In the terminal busbar 320, the first portion 321 may be connected to the second portion 322 through the bent portion 323, and one side of the first portion 321 and one side of the second portion 322 may be perpendicular to each other. That is, by forming the bent portion 323 in the terminal busbar 320, the second portion 322 protrudes and is mounted on a mounting portion 530 of the insulating cover 500, and the second portion 322 may be electrically connected to an inter-busbar (not shown). A joining hole 322a is formed in the second portion 322 constituting one end of the terminal busbar 320, and the second portion 322 of the terminal busbar 320 may be fixed by a fixing pin (not shown) inserted into the joining hole 322a.

In addition, the busbar frames 300 and 301 may include a protrusion 350. As shown in FIG. 9 and FIG. 10, the protrusion 350 may be disposed on the busbar frame 300 where the terminal busbar 320 is placed in the present embodiment. The protrusion 350 may protrude from the busbar frame 300 toward the insulating cover 500, and an end of the protrusion 350 may come into contact with the inner surface of the insulating cover 500. The protrusion 350 may extend outward from the busbar mounting portion 340 or the rib 330 and may extend vertically in the longitudinal direction of the busbars 310 and 320 in the busbar frame 300.

The end plates 400 and 401 may be disposed on the outside of two insulating covers 500 and 501 placed on both sides of the battery cell stack 100. The end plates 400 and 401 may be used to seal the open surface of the module case 200 to protect the battery cell stack 100 and electrical components connected thereto from external physical impact. To this end, the end plates 400 and 401 may be made of a material having a predetermined strength, and for example, the end plates 400 and 401 may include a metal such as aluminum or a plastic material.

The end plates 400 and 401 may include the terminal opening 410. In the present embodiment, the terminal opening 410 may be disposed in the end plate 400 placed on the outside of the insulating cover 500 on which one end of the terminal busbar 320 is mounted. The terminal opening 410 may be disposed on each side of the end plate 400, and a part of the insulating cover 500 and one end (the second portion 322) of the terminal busbar 320 may be exposed through the terminal opening 410.

In addition, a connector opening may be positioned between the terminal openings 410 located on both sides of the end plate 400, and a module connector may be exposed to the outside through the connector opening.

The end plates 400 and 401 may be combined with the module case 200 while covering the busbar frames 300 and 301 or the busbars 310 and 320 located on one side of the battery cell stack 100. Each corner of the end plate 400 may be combined with a corresponding corner of the module case 200 by a method such as welding, bolt fastening, or hook fastening.

The end plates 400 and 401 may be positioned on one side and the other side of the module case 200 to cover both sides of the battery cell stack 100. In the present embodiment, an example in which the end plates 400 and 401 are positioned on the front and rear sides of the module case 200 is illustrated.

In addition, the insulating covers 500 and 501 for electrical insulation may be positioned between the end plates 400 and 401 and the busbar frames 300 and 301. In the present embodiment, the insulating covers 500 and 501 may be respectively positioned on both sides of the battery cell stack 100, one insulating cover 501 may be positioned between the end plate 401 and the busbar frame 301, and the other insulating cover 500 may be positioned between the end plate 400 and the busbar frame 300.

That is, the busbar frames 300 and 301, the insulating covers 500 and 501, and the end plates 400 and 401 may be sequentially positioned from the battery cell stack 100 to the outside. Like the end plates 400 and 401, a plurality of busbar frames 300 and 301 and a plurality of insulating covers 500 and 501 may be provided.

The insulating covers 500 and 501 may be made of an electrically insulating material or may include an insulating material and can block the busbars 310 and 320 from contacting the end plates 400 and 401.

The insulating cover 500 positioned on the outside of the busbar frame 300 where the terminal busbar 320 is disposed may include the opening 510 and the mounting portion 530. The opening 510 may be positioned on each side of the upper portion of the insulating cover 500, and one end (the second portion 322) of the terminal busbar 320 can be exposed through the opening 510.

In addition, a connector opening may be positioned between the openings 510 located on both sides of the insulating cover 500, and the module connector can be exposed to the outside through the connector opening.

The insulating covers 500 and 501 may be positioned on the inner surfaces of the end plates 400 and 401 and may be in close contact with the inner surfaces of the end plates 400 and 401, but the present disclosure is not limited thereto.

As described above, one end (the second portion 322) of the terminal busbar 320 may be exposed through the opening 510, and the exposed one end (the second portion 322) of the terminal busbar 320 may be mounted on the mounting portion 530. Accordingly, the mounting portion 530 may be disposed adjacent to the opening 510 and may be positioned on the upper outer surface.

The second portion 322 of the terminal busbar 320 may be mounted on the upper surface of the mounting portion 530, and thus the upper surface of the mounting portion 530 may form a mounting surface. In addition, as shown in FIG. 5, the fixing member (530) may include a fixing member 531 for fixing the terminal busbar 320.

The fixing member 531 may fix the second portion 322 of the terminal busbar 320 and may include a fixing hole 531a.

A fixing pin (not shown) may be inserted into the fixing hole 531a. The fixing pin (not shown) inserted into the joining hole 322a formed in the second portion 322 of the terminal busbar 320 may be fixed by being coupled to the fixing hole 531a, thereby fixing the second portion 322 of the terminal busbar 320 to the insulating cover 500.

Accordingly, the second portion 322 of the terminal busbar 320 is mounted on the mounting portion 530 of the insulating cover 500, and the second portion 322 comes into contact with the fixing member 531 disposed on the mounting portion 530.

In addition, a terminal cover (not shown) covering the exposed one end (the second portion 322) of the terminal busbar 320 may be disposed on the insulating cover 500.

As shown in FIG. 6 to FIG. 8, the insulating cover 501 on the opposite side of the insulating cover 500 on which one end of the terminal busbar 320 is mounted may include a pressure pad 540.

The pressure pad 540 may be disposed on the inner surface of the insulating cover 501 toward the busbar frame 301 and may pressurize the busbar frame 301 toward the battery cell stack 100. In addition, the pressure pad 540 may pressurize the battery cell stack 100 toward the opposite insulating cover 500 through the busbar frame 301. In addition, the pressure pad 540 may be compressed while pressurizing the busbar frame 301.

A plurality of pressure pads 540 may be disposed to be spaced apart from each other, and the plurality of pressure pads 540 may be arranged to be spaced apart from each other in the width direction (X-axis direction) of the insulating cover 501 or the battery module 1000.

Each of the pressure pads 540 may extend in the vertical direction, and the vertical length of the pressure pad 540 may be less than that of the insulating cover 501. The pressure pad 540 is illustrated as having a rectangular cross-section in a plan view, but is not limited thereto and may have a cross-section of a different shape.

The pressure pad 540 may pressurize the busbar frame 301 between the busbars 310 and 320 disposed in the busbar frame 301, and specifically, the front end of the pressure pad 540 may contact the rib 330 located between the busbars 310 and 320 in the busbar frame 301 to pressurize the rib 330.

In the busbar frames 300 and 301, the rib 330 may be positioned between the busbars 310 and 320 and may be formed in a concave shape toward the battery cell stack 100. The front end of the pressure pad 540 may be positioned between the two busbars 310 and 320, and the pressure pad 540 may contact the rib 330 between the busbars 310 and 320 to press the rib 330 toward the battery cell stack 100.

The pressure pad 540 may be a foam pad and may be made in the form of a synthetic resin foam. For example, the pressure pad 540 may be formed of a urethane foam.

Although an example in which three pressure pads 540 are disposed on the insulating cover 501 is illustrated in FIG. 7, the number of pressure pads may be changed.

As described above, the pressure pads 540 pressurize the battery cell stack 100 through the busbar frame 301 toward the opposite insulating cover 500, and the protrusion 350 of the opposite busbar frame 300 contacts the inner surface of the insulating cover 500. As a result, the accuracy of the position of the hole (joining hole 322a) of the terminal busbar 320 is improved.

As described above, the fixing pin (not shown) inserted into the joining hole 322a of the terminal busbar 320 is joined and fixed to the fixing hole 531a of the insulating cover 500, and thus the terminal busbar 320 can be fixed to the insulating cover 500. However, if the joining hole 322a of the terminal busbar 320 and the fixing hole 531a of the insulating cover 500 are not aligned and the joining hole 322a of the terminal busbar 320 is misaligned from the fixing hole 531a of the insulating cover 500, it becomes difficult to fix the terminal busbar 320 to the insulating cover 500 with the fixing pin.

Therefore, the position of the hole of the terminal busbar 320 is important, and thus in the present disclosure, the pressure pad 540 pressurizes the battery cell stack 100 toward the opposite insulating cover 500, and when the protrusion 350 of the opposite busbar frame 300 contacts the inner surface of the insulating cover 500, the joining hole 322a of the terminal busbar 320 can be positioned at a correct position. Accordingly, as illustrated in FIG. 11, the joining hole 322a of the terminal busbar 320 can be arranged to match the fixing hole 531a of the insulating cover 500, and thus the assembling and workability of the battery module 1000 can be improved.

Incidentally, electrical connection between battery modules 1000 may be made through an inter-busbar (not shown). The inter-busbar is a member for connecting one battery module 1000 to another adjacent battery module 1000 or a battery disconnection unit (BDU), and may be connected to the exposed one end (second portion 322) of the terminal busbar 320. For example, the inter-busbar may be connected by overlapping one end (second portion 322) of the terminal busbar 320.

After one end of the inter-busbar is disposed to overlapping the second portion 322 of the terminal busbar 320, the fixing pin is sequentially inserted into a joining hole of the inter-busbar and the joining hole 322a of the second portion 322 of the terminal busbar 320, and then the fixing pin is fixed to the fixing hole 531a of the mounting portion 530, and thus the inter-busbar can be connected to the terminal busbar 320.

Then, the second portion 322 of the terminal busbar 320 can be fixed to the insulating cover 500 along with the inter-busbar by the fixing pin.

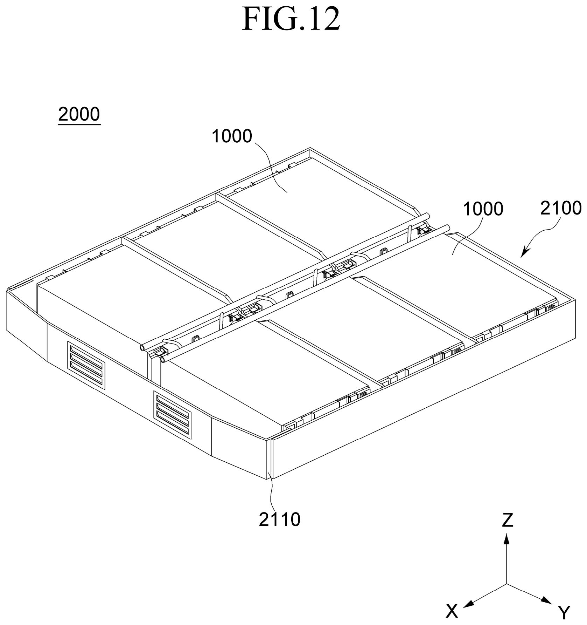

One or more battery modules 1000 according to the present disclosure as described above can form a battery pack 2000. As illustrated in FIG. 12, the battery pack 2000 according to an embodiment of the present disclosure may accommodate at least one battery module 1000 inside a pack case 2100, and may include various control and protection systems such as a battery management system (BMS), a cooling system, etc.

The pack case 2100 may include a lower housing 2110 and an upper housing (not shown) coupled to the upper side of the lower housing 2110, and a plurality of battery modules 1000 may be accommodated in the internal space of the lower housing 2110 and the upper housing.

Although an example in which a plurality of battery modules 1000 is accommodated inside the battery pack 2000 is illustrated in the embodiment of the present disclosure, a plurality of battery cells 110 may be directly disposed inside the battery pack 2000.

The battery module 1000 and the battery pack 2000 according to the present disclosure configured in this manner may be applied to various devices. Specifically, they can be applied to means of transportation such as electric bicycles, electric vehicles V, hybrid vehicles, and an energy storage system (ESS), but the battery module 1000 and the battery pack 2000 are not limited thereto and can be applied to various devices that can use secondary batteries.

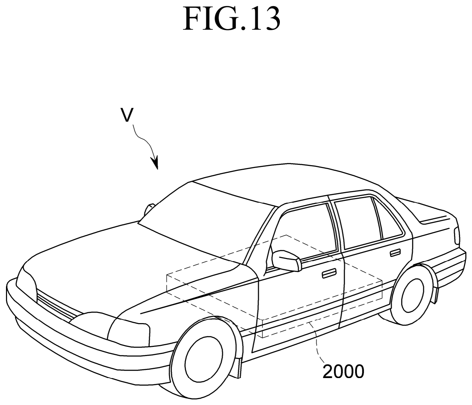

FIG. 13 is a diagram illustrating an electric vehicle (V) equipped with the battery pack 2000. The electric vehicle V can be driven in such a manner that wheels are driven by a motor that receives power from the battery pack 2000.

The present disclosure has been described with reference to preferred embodiments as described above, but is not limited to the above embodiments, and various changes and modifications may be made by those skilled in the art within the scope that does not depart from the spirit of the present disclosure.

### [INDUSTRIAL APPLICABILITY]

The present disclosure can provide a battery module and pack capable of restricting the position of a cell block and improving the accuracy of the position of a hole of a terminal busbar.

## Claims

1. A battery module comprising:
a battery cell stack in which a plurality of battery cells is stacked;
a module case for accommodating the battery cell stack;
a busbar frame disposed on one side of the battery cell stack; and
two insulating covers disposed on both sides of the battery cell stack,
wherein one of the two insulating covers includes a pressure pad, the other insulating cover is disposed on the outside of the busbar frame, and the pressure pad of the one insulating cover pressurizes the battery cell stack in a direction of the other insulating cover disposed on the outside of the busbar frame.

2. The battery module of claim 1, wherein the pressure pad is disposed on an inner surface of the one insulating cover facing the battery cell stack.

3. The battery module of claim 1, wherein the pressure pad is compressible.

4. The battery module of claim 1, wherein the pressure pad is a foam pad.

5. The battery module of claim 1, wherein a plurality of pressure pads is disposed on the inner side of the one insulating cover.

6. The battery module of claim 1, wherein the busbar frame includes a protrusion, and the protrusion contacts the other insulating cover.

7. The battery module of claim 1, wherein the busbar frame is disposed on each of both sides of the battery cell stack, and the two insulating covers are respectively disposed on outer sides of the busbar frames on both sides of the battery cell stack.

8. The battery module of claim 7, further comprising a plurality of busbars disposed in the busbar frame.

9. The battery module of claim 8, wherein an end of the pressure pad is disposed between the busbars.

10. The battery module of claim 8, wherein the busbar frame further includes a rib disposed between the busbars.

11. The battery module of claim 10, wherein the pressure pad pressurizes the rib.

12. The battery module of claim 1, wherein the pressure pad extends vertically inside the one insulating cover.

13. The battery module of claim 1, further comprising:
a terminal busbar disposed in the busbar frame; and
a fixing member having a fixing hole for fixing one end of the terminal busbar and disposed beneath one end of the terminal busbar in the other insulating cover.

14. The battery module of claim 13, further comprising an end plate disposed on the outside of the other insulating cover and having a terminal opening through which one end of the terminal busbar is exposed.

15. The battery module of claim 13, wherein the terminal busbar includes a joining hole disposed at one end of the terminal busbar.

16. The battery module of claim 1, further comprising two end plates respectively disposed on the outer sides of the two insulating covers.

17. A battery module comprising:
a battery cell stack in which a plurality of battery cells is stacked;
a module case for accommodating the battery cell stack;
a busbar frame disposed on one side of the battery cell stack; and
an insulating cover disposed on the outside of the busbar frame,
wherein the busbar frame includes a protrusion contacting the insulating cover.
